# EUROPEAN PATENT APPLICATION

(11) **EP 4 645 272 A1**
(43) Date of publication of application: **05.11.2025**
(21) Application number: 23902859.0
(22) Date of filing: 30.10.2023
(51) Int. Cl.: G07C 9/10, G06V 20/62

(54) **METHOD FOR CONTROLLING VEHICLE ACCESS TO SECURED SITES**

(30) Priority: 13.12.2022 EA 202390048
(71) Applicant: Sukhachev, Nikolay, Minsk, 220121 (BY)
(72) Inventor: Sukhachev, Nikolay, Minsk, 220121 (BY)
(74) Representative: Jeck, Jonathan
(86) International application number: PCT/EA2023/050006
(87) International publication number: WO 2024/125750

(57) **Abstract**

The present method relates to solutions for providing controlled vehicle access at entry/exit points. The method includes: a preliminary step in which a vehicle user is assigned at least two identifiers, the first being identical to the registration number of the vehicle and the second being identical to the MAC address of a wireless initialization device of the user; a step of receiving the first identifier, in which the vehicle registration number is identified and the received registration number is compared with first identifiers; a step of receiving the second identifier, in which the MAC address of the wireless initialization device of the user is received and compared with second identifiers; and an initialization step, in which the received first and second identifiers are matched to the corresponding vehicle.

## Description

The present invention relates to the methods for controlling vehicle access to secured sites, at the controlled vehicle entry/exit points. In particular, such areas are the controlled vehicle entry and exit points at the parking spaces, the territories adjacent to blocks of flats, the multi-level parking.

A method of control and management of access to parking lot is known [1], wherein a primary identification client's code stored at the client's electronic card and a secondary code-analog of the primary client's code, recorded on the first and second client's electronic cards respectively, are formed. While exit from the parking lot the second electronic card is enabled and the first client's card is changed to the second client's card. After admission of the vehicle to the parking lot the first client's electronic card is deactivated and the first client's card is changed to the second client's card. The said method contains many operations and requires the driver to exit the car, which increases the time for one car to pass and in large parking lots such a system can cause a queue of cars at the entrance/exit.

A method and system for controlling vehicle passage through preset boundary, wherein a video camera with a "fisheye" is used [2]. In the said method using a video system to monitor the movement of cars in both directions, before the car crosses this border, an image of a license plate of this car, which is a candidate for this intersection, is received, then the registration number of the car indicated on this license plate is recognized, and then a control signal for the barrier, set at this border, is generated, for which purpose the pass criterion is calculated by comparing the obtained controlled registration number with the control numbers stored in the database, and a control signal is supplied to the control unit of this barrier to allow the vehicle to cross the specified border if its registration number meets the calculated criterion for allowing the car passage.

The method is applicable for work in the autonomous mode for controlling vehicle passage using the criteria for permitting the passage of vehicles, suitable for various situations. This method does not allow controlling the presence of the owner in the car leaving the secured sites, therefore, it makes it possible to steal the car from the parking lot.

An access management and control system by using mobile telecommunication device is known [3]. The mentioned system contains a mobile telecommunication device, a user ID, a wireless interface, an electronic reader, an NFC interface, an access point identifier, a wireless interface, a telecommunications infrastructure, a network interface, a Wiegand interface, a switch, a controller, an access point, an executive device. To pass through the access point through the identifier, the user's identification feature is transmitted by the reader to the switch, which relays the data to the corresponding port of the controller. When using a mobile telecommunication device, the user reads the access point code from the access point mark. The mobile device transmits the identification and access point code to the switch, which calculates the port of the controller to which the mark corresponds on the access point, and transmits the user's identification characteristic to it. The controller, in case of successful identification and user authentication, sends an opening signal to the executive device at the access point.

This system is quite expensive, as it requires a wired interface. Furthermore, a mobile telecommunication device or identifiers may be transferred by the user to other persons, which does not provide a reliable method of control.

The object of the present invention is to develop a method for controlling vehicle passes at the controlled vehicle entry/exit points. At the same time, the technical result is to provide an autonomous pass mode, while reducing the cost of additional preparatory work on the formation of the infrastructure of the entry/exit point, while increasing the reliability of control over departing vehicles through the use of at least dual vehicle identification techniques, as well as access control through established access policies.

The above object is achieved by a method, in which the entry/exit blocking device, a vehicle number plate recognition system, bound to a control server, comprising a software and a vehicle database and designed to supply control signals to the entry/exit blocking device, the wireless access point, arranged to be connected to the control server, the wireless initialization device of the user, designed to be connected wirelessly to a wireless access point, are used, the said method comprising the following steps:
- a preliminary step, wherein the access point is placed in such a way that the entry/exit blocking device enters the radio coverage area of the wireless access point, the wireless initialization device of the user in a radio network of the wireless access point is registered a unique identifier (the MAC address) of the wireless initialization device of the user is determined, a record about the vehicle is entered in the vehicle database, the said record comprising at least the data about the vehicle brand, its registration number, and at least one user is assigned to the vehicle, the first identifier which is identical to the vehicle registration number, the second identifier, which is identical to the MAC address of a wireless initialization device of the user, the third identifier which is a secret vehicle user identifier and is chosen by the vehicle user itself is assigned to the user, a vehicle policy that has at least one of the following rules is established:
- to provide access to secured sites;
- to prohibit access to secured sites;
- a step of receiving the first identifier, on which the vehicle registration number is recognized using the vehicle license plate recognition system of the vehicle, moving in the direction of the entry/exit blocking device, and the data is transmitted to the control server, compare the received registration number with the first identifiers stored in the database, and if there is a match, the first identifier is received;
- a step of receiving the second identifier, in which the authorization request of the wireless initialization device of the user in the radio coverage area of the wireless access point is received, authorization of the wireless initialization device of the user in the radio coverage area of the wireless access point is performed, if the device is identified as an authorized user's wireless device, the received Mac address of the wireless initialization device of the user is transmitted to the control server, the received Mac address is compared with the second identifiers, stored in the database, and if there is a match, the second identifier is received;
- an initialization step, in which the correspondence of the received first, second and third identifiers to one vehicle is determined, and if there is such a vehicle, the policy established in relation to the revealed vehicle is checked, if the entry/exit is allowed by the policy, then a command to open the entry/exit blocking device is formed.

At the request of the user of the vehicle, a triple identification method can be applied. In this case the method comprises additional steps, in which the secret user identifier is received on the control server, then it is compared with the third identifiers stored in the database, and if there is a match, the third identifier is received, and the correspondence of the received first, second and third identifiers to one vehicle is determined at the initialization step, and if there is such a vehicle, the policy established in relation to the revealed vehicle is checked, and if the entry/exit is allowed by the policy, then a command to open the entry/exit blocking device is formed. In such a case the secret user identifier may be received via a mobile application or SMS.

For the autonomy of the method implementation a mobile phone, or a tablet, or a Wi-Fi tag, or a Bluetooth tag are chosen as a wireless initialization device of the user.

Any known device capable of performing the functions of preventing free passage may be used as the entry/exit blocking device. The gate, or sliding doors, or a chain block, or a lifting barrier, or a spike barrier are preferably chosen as the entry/exit blocking device.

In the preferred embodiment the first and the second steps are carried out simultaneously.

The method is carried out as follows.

In a secured site where there is the entry/exit blocking device, and the vehicle recognition system, the wireless access point is placed in such a way that the entry/exit blocking device enters the radio coverage area of the wireless access point. The vehicle user enters the radio coverage area of the wireless access point having a wireless user initialization device, designed to work in the Ethernet network, Wi-Fi or Bluetooth, which may be chosen at the user's request. The devices are preferably of a small size: a mobile phone, or a tablet, or a Wi-Fi tag, or a Bluetooth tag. The wireless initialization device of the user in a radio network of the wireless access point is registered. A unique identifier (the MAC address) of the wireless initialization device of the user is determined upon registration. A record, comprising the data about the vehicle, the vehicle brand, its registration number is entered in the vehicle database. At least one user is assigned to the vehicle. Since there may be several users of one vehicle, for example, there is one car in the family, but it is used by all family members, the registration procedure in the radio coverage area of the wireless access point is carried out individually for each family member with its wireless user initialization device, and all the family members, registered in the radio coverage area of the wireless access point are appointed for the vehicle. The first identifier, which is identical to the vehicle registration number, the second identifier, which is identical to the MAC address of a wireless initialization device of the user, the third identifier, which is a secret vehicle user identifier, which is chosen by the vehicle user itself, are assigned to each vehicle user. A vehicle policy that has at least one of the following rules is established for each vehicle:
- to provide access to secured sites;
- to prohibit access to secured sites.

When the vehicle is moving in the direction of the entry/exit blocking device, an image of the license plate of an approaching vehicle is obtained using the vehicle license plate recognition system, the registration number on the license plate is recognized and transmitted to the control server, where the received registration number is compared with the first identifiers stored in the database, and if there is a match, the first identifier is received.

In order for the vehicle to pass through the area of the installation site of the entry/exit blocking device, a driver should have the wireless initialization device of the user, used to complete an authorization process. When entering the radio coverage area of the wireless access point the authorization of the wireless initialization device of the user takes place. And if the device is identified as an authorized user's wireless device, the Mac address of the said wireless device is received and transmitted to the control server, where the received Mac address is compared with the second identifiers, stored in the database, and if there is a match, the second identifier is received.

The correspondence of the received first and the second identifiers to one vehicle is further determined, and if there is such a vehicle, the policy established in relation to the revealed vehicle is checked, if the entry/exit is allowed by the policy, then a command to open the entry/exit blocking device is formed.

If the user of the vehicle has established a triple identification method for himself, then a message with the secret user identifier is received additionally from the user via SMS or mobile application. Then it is compared with the third identifiers stored in the database, and if there is a match, the third identifier is received. The correspondence of the received first, second and third identifiers to one vehicle is determined, and if there is such a vehicle, the policy established in relation to the revealed vehicle is checked, and if the entry/exit is allowed by the policy, then a command to open the entry/exit blocking device is formed.

In case when the secured site is small in size, the step of receiving the first identifier and the step of receiving the second identifier may be carried out simultaneously.

Thus, when implementing this method, the following control options arise. If the user of the vehicle passes across the controlled entry/exit point in its vehicle, with its registered wireless initialization device, and there are no restrictive policies in respect of the vehicle, then the passage is carried out automatically. In other cases, such as an attempt to pass a controlled entry/exit point in "someone else's" vehicle using an authorized wireless user initialization device or in someone's own vehicle but using "someone else's" wireless initialization device of the user, will not be possible. The passage will also not be possible if there are restrictive policies in any case.
1. Patent EA 015970. IPC G08G 1/017. Publication date 2011.04.29
2. Patent RU 2599954. IPC G06K 9/00. Publication date 2015.10.10
3. Patent RU 2643898. IPC G07C 9/00. Publication date 2018.02.06

## Claims

1. A method for controlling vehicle access to secured sites, wherein the entry/exit blocking device, a vehicle number plate recognition system, bound to a control server, comprising a software and a vehicle database and designed to supply control signals to the entry/exit blocking device, the wireless access point, arranged to be connected to the control server, the wireless initialization device of the user, designed to be connected wirelessly to a wireless access point, are used, the said method comprising the following steps:
a) a preliminary step, wherein the access point is placed in such a way that the entry/exit blocking device enters the radio coverage area of the wireless access point, the wireless initialization device of the user in a radio network of the wireless access point is registered, a unique identifier (the MAC address) of the wireless initialization device of the user is determined, a record about the vehicle is entered in the vehicle database, the said record comprising at least the data about the vehicle brand, its registration number, and at least one user is assigned to the vehicle, the first identifier which is identical to the vehicle registration number, the second identifier, which is identical to the MAC address of the wireless initialization device of the user, the third identifier which is a secret vehicle user identifier and is chosen by the vehicle user itself is assigned to the user, a vehicle policy that has at least one of the following rules is established:
- to provide access to secured sites;
- to prohibit access to secured sites,
b) a step of receiving the first identifier on which the vehicle registration number is recognized using the vehicle license plate recognition system of the vehicle, moving in the direction of the entry/exit blocking device, and the data is transmitted to the control server, compare the received registration number with the first identifiers stored in the database, and if there is a match, the first identifier is received;
c) a step of receiving the second identifier in which the authorization request of the wireless initialization device of the user in the radio coverage area of the wireless access point is received, authorization of the wireless initialization device of the user in the radio coverage area of the wireless access point is performed, if the device is identified as an authorized user's wireless device, the Mac address of the wireless initialization device of the user is received and transmitted to the control server, the received Mac address is compared with the second identifiers, stored in the database, and if there is a match, the second identifier is received;
d) an initialization step, in which the received first and second identifier are matched to the corresponding vehicle and if there is such a vehicle, the policy established in relation to the revealed vehicle is checked, if the entry/exit is allowed by the policy, then a command to open the entry/exit blocking device is formed.

2. The method according to Claim 1, **characterized in that** it comprises additional steps, wherein the secret user identifier is received on the control server, then it is compared with the third identifiers stored in the database, and if there is a match, the third identifier is received, and the correspondence of the received first, second and third identifiers to one vehicle is determined at the initialization step, and if there is such a vehicle, the policy established in relation to the revealed vehicle is checked, and if the entry/exit is allowed by the policy, then a command to open the entry/exit blocking device is formed.

3. The method according to Claim 2, **characterized in that** the secret user identifier is received via a mobile application.

4. The method according to Claim 2, **characterized in that** the secret user identifier is received via SMS.

5. The method according to Claim 1, **characterized in that** a mobile phone, or a tablet, or a Wi-Fi tag, or a Bluetooth tag is chosen as the wireless initialization device of the user.

6. The method according to Claim 1, **characterized in that** the gate, or sliding doors, or a chain block, or a lifting barrier, or a spike barrier are chosen as the entry/exit blocking device.

7. The method according to Claim 1, **characterized in that** the step of receiving the first identifier and the step of receiving the second identifier are carried out simultaneously.
